# FASCICULE DE BREVET EUROPEEN

(11) **EP 3 487 153 B1**
(45) Date de publication et mention de la délivrance du brevet: **13.05.2020**
(21) Numéro de dépôt: 18207657.0
(22) Date de dépôt: 21.11.2018
(51) Int. Cl.: H04L 29/06, G06F 3/147, G06F 3/14, B64D 43/00, G05D 1/00, G08G 5/00

(54) **DISPOSITIF AVIONIQUE ET PROCÉDÉ D'ÉMISSION D'UN MESSAGE DE DONNÉES À DESTINATION D'AU MOINS UN DISPOSITIF ÉLECTRONIQUE RÉCEPTEUR, DISPOSITIF ÉLECTRONIQUE RÉCEPTEUR, PROCÉDÉ DE RÉCEPTION ET PROGRAMME D'ORDINATEUR ASSOCIÉS**
FLUGZEUGVORRICHTUNG UND SENDEVERFAHREN EINER DATENNACHRICHT ZUM EMPFANG DURCH MINDESTENS EINE ELEKTRONISCHE EMPFANGSVORRICHTUNG, ENTSPRECHENDE ELEKTRONISCHE EMPFANGSVORRICHTUNG, ENTSPRECHENDES EMPFANGSVERFAHREN UND COMPUTERPROGRAMM
AVIONICS DEVICE AND METHOD FOR TRANSMITTING A DATA MESSAGE TO AT LEAST ONE RECIPIENT ELECTRONIC DEVICE, ASSOCIATED RECIPIENT ELECTRONIC DEVICE, RECEPTION METHOD AND COMPUTER PROGRAM

(30) Priorité: 21.11.2017 FR 1701209
(43) Date de publication de la demande: 22.05.2019
(73) Titulaire: Thales, 92400 Courbevoie (FR)
(72) Inventeur: TODESCATO, Isabelle, 33700 MERIGNAC (FR); VENGEON, Jean-Jérôme, 33700 MERIGNAC (FR); ROULON, Stéphane, 33700 MERIGNAC (FR); BILLAULT, Ludovic, 33700 MERIGNAC (FR)
(74) Mandataire: Lavoix

(56) Documents cités:
- US-A1- 2012 036 445
- US-A1- 2017 075 503
- US-B1- 9 060 010
- Yannick Lefebvre ET AL: "Mastering the ARINC 661 Standard Table of Contents", , 1 décembre 2011 (2011-12-01), XP055249278, Extrait de l'Internet: URL:http://www.edstechnologies.com/Mailer/ jan12/PF_3.pdf [extrait le 2016-02-11]

## Description

La présente invention concerne un dispositif avionique destiné à être embarqué à bord d'un aéronef, le dispositif avionique étant configuré pour mettre en oeuvre une fonction avionique et pour commander l'affichage, par au moins un dispositif électronique récepteur, de données associées à la fonction avionique, la fonction avionique comportant une ou plusieurs commandes avioniques aptes à être affichées sur le dispositif récepteur et sélectionnées par un utilisateur.

Le dispositif avionique comprend un module de génération configuré pour générer un message de données, et un module d'émission configuré pour émettre le message généré à destination du dispositif récepteur.

La présente invention concerne également un procédé d'émission d'un message de données à destination d'au moins un dispositif électronique récepteur, le procédé étant mis en oeuvre par un tel dispositif avionique.

La présente invention concerne aussi un dispositif électronique récepteur configuré pour recevoir un message de données de la part d'un tel dispositif avionique.

La présente invention concerne également un procédé de réception d'un message de données de la part d'un tel dispositif avionique, le procédé de réception étant mis en œuvre par un tel dispositif électronique récepteur.

La présente invention concerne aussi un programme d'ordinateur comportant des instructions logicielles qui, lorsqu'elles sont exécutées par un ordinateur, mettent en œuvre un tel procédé d'émission ou un tel procédé de réception.

La présente invention concerne le domaine de la communication de données et de l'interfaçage fonctionnel à travers un réseau avionique entre un dispositif avionique destiné à être embarqué à bord d'un aéronef et un ou des dispositifs récepteurs qui ne sont pas nécessairement embarqués à bord de l'aéronef. Le dispositif avionique est dit fonctionnel en étant configuré pour mettre en œuvre une fonction avionique. Le dispositif avionique est par exemple un système de gestion de vol ou FMS (de l'anglais *Flight Management System*), un système de gestion de radio ou RMS (de l'anglais *Radio Management System*), un système d'alerte terrain ou TAWS (de l'anglais *Terrain Awareness and Warning System*), un système radar de météorologie, un récepteur AIS (de l'anglais *Avionics Interface Systems*), ou encore un système de préparation de mission. Le dispositif récepteur est par exemple un système d'affichage dans le cockpit ou CDS (de l'anglais *Cockpit Display System*) ou un dispositif d'affichage tête haute ou HUD (de l'anglais *Head-Up Display*), ou encore un cartable de vol électronique ou EFB (de l'anglais *Electronic Flight Bag*). L'homme du métier notera qu'en variante, le dispositif récepteur est un dispositif mettant en œuvre une autre fonction avionique. L'invention concerne alors par exemple un échange de données entre un système de gestion de vol ou FMS et un système de gestion de radio ou RMS.

On connait des réseaux de communication conformes au protocole ARINC 661 ou au protocole ARINC 739. Ces protocoles ARINC 661 et ARINC 739 permettent de supporter l'interface entre un dispositif avionique fonctionnel et un dispositif d'affichage. Avec le protocole ARINC 661, les échanges se font sur des objets graphiques qui sont hébergés dans le dispositif d'affichage et piloté fonctionnellement par le dispositif avionique fonctionnel. Avec le protocole ARINC 739, les informations échangées sont des appuis clavier et des caractères à afficher. Avec les protocoles ARINC 661 et ARINC 739, l'affichage des données est donc entièrement piloté par le dispositif avionique fonctionnel, le dispositif d'affichage - formant ici le dispositif client ou dispositif récepteur - ayant seulement pour rôle de suivre les instructions d'affichage issues du dispositif avionique fonctionnel.

On connait également du document US 2012/036445 A1 un dispositif avionique configuré pour mettre en œuvre une fonction avionique et commander l'affichage de données associées à la fonction avionique.

Toutefois, de tels protocoles de communication ne sont pas adaptés lorsque la gestion de l'affichage, et plus généralement de l'interface homme-machine, doit être effectuée au moins partiellement par le dispositif récepteur, ou encore lorsque l'interface homme-machine doit être gérée indépendamment de la fonction avionique.

Le but de l'invention est alors de proposer un dispositif avionique et un procédé d'émission associé, qui permettent d'améliorer le couplage entre le dispositif avionique et le ou les dispositifs récepteurs.

A cet effet, l'invention a pour objet un dispositif avionique selon la revendication 1.

Le dispositif avionique selon l'invention est alors configuré pour transmettre au(x) dispositif(s) récepteur(s) le message de domaine d'usage contenant la liste de commande(s) avionique(s) disponible(s) pour la fonction avionique correspondante, ceci afin de permettre au(x) dispositif(s) récepteur(s) de connaitre et d'afficher, notamment à destination de l'utilisateur, la disponibilité de commande(s) pour la ou les seules commandes incluses dans ladite liste.

La connaissance, par le ou les dispositifs récepteurs, du domaine d'usage de la fonction avionique mise en œuvre par le dispositif avionique permet alors d'améliorer le couplage entre le dispositif avionique et le ou les dispositifs récepteurs.

Suivant d'autres aspects avantageux de l'invention, le dispositif avionique est selon l'une des revendications 2 à 6.

L'invention a également pour objet un procédé d'émission selon la revendication 7.

L'invention a également pour objet un dispositif électronique récepteur selon la revendication 8.

L'invention a également pour objet un procédé de réception selon la revendication 9.

L'invention a également pour objet un programme d'ordinateur selon la revendication 10

Ces caractéristiques et avantages de l'invention apparaîtront plus clairement à la lecture de la description qui va suivre, donnée uniquement à titre d'exemple non limitatif, et faite en référence aux dessins annexés, sur lesquels :
- la figure 1 est une représentation schématique d'un système de communication comprenant au moins deux équipements électroniques reliés entre eux par un réseau avionique de communication, au moins l'un des équipements électroniques comportant un dispositif avionique selon l'invention ;
- la figure 2 est un organigramme d'une transmission de données au sein du système de communication de la figure 1, avec la mise en œuvre d'un procédé d'émission selon l'invention, puis d'un procédé de réception selon l'invention ; et
- la figure 3 est une vue schématique représentation la structure d'un message de domaine d'usage émis par le dispositif électronique émetteur selon l'invention ; et
- la figure 4 est un chronogramme avec la transmission de messages successifs entre le dispositif avionique et un dispositif électronique récepteur, illustrant la mise en œuvre d'un acquittement avec une condition minimale de mise à disposition des données requises.

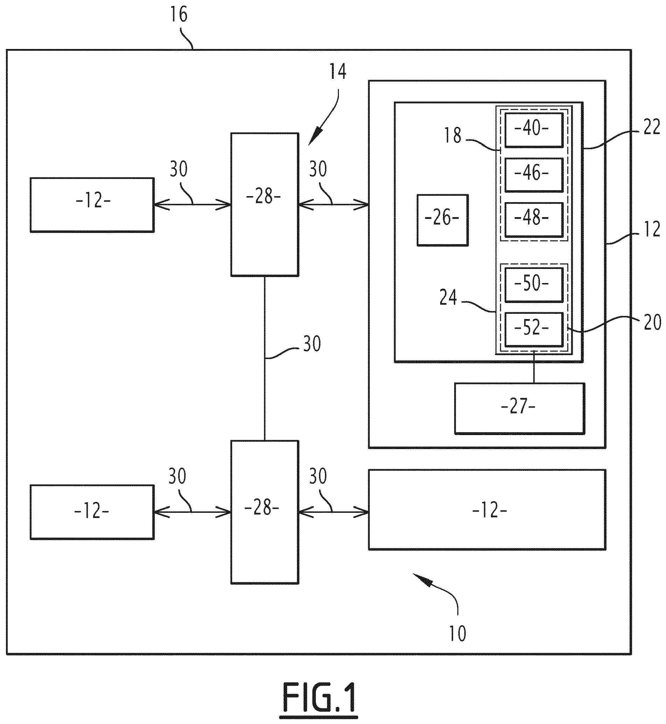

Sur la figure 1, un système de communication 10 comportant au moins deux équipements électroniques 12 reliés entre eux par un réseau avionique de communication 14, tel qu'un réseau de communication Ethernet. Au moins l'un des équipements électroniques 12 et le réseau avionique de communication 14 sont embarqués à bord d'un aéronef 16. L'aéronef 16 est de préférence un avion. En variante, l'aéronef 16 est un hélicoptère, ou encore un drone piloté à distance par un pilote.

Le système de communication 10 comporte plusieurs équipements électroniques 12, tels que des équipements avioniques comme dans l'exemple de la figure 1 où le système de communication 10 est embarqué à bord de l'aéronef 16.

Le système de communication 10 comprend un dispositif avionique émetteur 18 et au moins un dispositif électronique récepteur 20 reliés entre eux par le réseau avionique de communication 14. Le dispositif avionique émetteur 18 est embarqué à bord de l'aéronef 16 et le ou les dispositifs récepteurs 20 ne sont pas nécessairement embarqués à bord de l'aéronef.

Dans l'exemple de la figure 1, le dispositif avionique émetteur 18 et le dispositif récepteur 20 sont disposés au sein d'un même équipement électronique 12.

En variante, non représentée, le dispositif avionique émetteur 18 est disposé au sein d'un premier équipement électronique 12 et le dispositif récepteur 20 est disposé au sein d'un deuxième équipement électronique 12 distinct du premier équipement électronique 12.

En variante encore, non représentée, le dispositif récepteur 20 est un dispositif électronique externe à un domaine de communication sécurisé au sein de l'aéronef 16, ce dispositif récepteur 20 étant par exemple un dispositif externe à l'aéronef 16, tel qu'un dispositif électronique installé au sol. Ce dispositif récepteur 20 externe est alors relié à chaque autre dispositif du système de communication 10 via une passerelle de communication, non représentée, embarquée à bord de l'aéronef 16 et connectée au réseau avionique de communication 14. Le domaine externe à ce domaine de communication sécurisé est également appelé monde ouvert. Le dispositif récepteur 20 externe appartient alors au monde ouvert, et la passerelle de communication qui est une passerelle sécurisée, en incluant notamment un pare-feu informatique (de l'anglais *firewall*)*,* assure l'interface entre le domaine sécurisé et le monde ouvert.

Dans l'exemple de la figure 1, chaque équipement électronique 12 comprend une unité de traitement d'informations 22 formée par exemple d'une mémoire 24 associée à un processeur 26.

Dans l'exemple de la figure 1, l'équipement électronique 12 qui inclut le dispositif avionique émetteur 18 et le dispositif récepteur 20 comprend en outre un écran d'affichage 27, également appelé écran de visualisation.

Dans l'exemple de la figure 1, un seul équipement électronique 12 est représenté en détail avec les différents dispositifs et modules qu'il contient, par souci de simplification du dessin.

Le réseau avionique de communication 14 comprend au moins un commutateur réseau 28 et au moins une liaison bidirectionnelle 30, chaque commutateur réseau 28 étant connecté à un ou plusieurs équipements électroniques 12 via des liaisons bidirectionnelles 30 respectives. Le réseau de communication avionique 14 comprend de préférence plusieurs commutateurs réseau 28, comme dans l'exemple de la figure 1 où le réseau avionique de communication 14 comprend deux commutateurs réseau 28 reliés entre eux par une liaison bidirectionnelle 30.

L'homme du métier comprendra que, lorsque le réseau avionique de communication 14 est un réseau de communication Ethernet, chaque commutateur réseau 28 est un commutateur réseau Ethernet, et chaque liaison bidirectionnelle 30 est une liaison bidirectionnelle Ethernet.

En complément facultatif, le réseau avionique de communication 14 est un réseau de communication redondant et comporte au moins deux réseaux élémentaires indépendants, redondants l'un de l'autre. Dans ce cas, deux équipements électroniques 12, un équipement source et un équipement destinataire, communiquent par l'intermédiaire d'au moins deux réseaux élémentaires indépendants.

Chaque dispositif avionique émetteur 18 est configuré pour mettre en œuvre une fonction avionique et commander l'affichage, par au moins un dispositif électronique récepteur 20, de données associées à la fonction avionique, la fonction avionique comportant une ou plusieurs commandes avioniques aptes à être affichées sur le dispositif récepteur 20 et sélectionnées par un utilisateur.

Par fonction avionique, on entend une fonction d'aide au pilotage de l'aéronef 16, notamment dans l'espace aérien, telle qu'une fonction de gestion de vol, une fonction de gestion de radio de navigation, une fonction d'anticollision d'un terrain, une fonction de météorologie, une fonction d'information de bord, ou encore une fonction de préparation de mission.

L'homme du métier comprendra alors que lorsque la fonction avionique mise en œuvre par le dispositif avionique 18 est une fonction de gestion de vol, respectivement une fonction de gestion de radio de navigation, une fonction d'anticollision d'un terrain, une fonction de météorologie, une fonction d'information de bord, ou encore une fonction de préparation de mission, le dispositif avionique 18 est alors par exemple un système de gestion de vol, également appelé FMS, respectivement un système de gestion de radio, également appelé RMS, un système d'alerte terrain, également appelé TAWS, un système radar de météorologie, un système d'information de bord, tel qu'un récepteur AIS, ou encore un système de préparation de mission.

Par commande avionique, on entend une commande interagissant avec la fonction avionique.

La commande avionique est par exemple une commande de consultation, c'est-à-dire une commande permettant à un dispositif récepteur 20, ou client, de consulter un élément d'une fonction avionique. Pour la fonction d'anticollision d'un terrain mise en œuvre par le système d'alerte terrain (TAWS), la commande de consultation permet par exemple de consulter les informations d'un obstacle particulier ; pour la fonction de gestion de vol mise en œuvre le système de gestion de vol (FMS), la commande de consultation permet par exemple de consulter les informations d'un aéroport géré dans une base de données utilisateur du système de gestion de vol.

A titre d'exemple complémentaire, la commande avionique est une commande de de modification, c'est-à-dire une commande permettant à un dispositif récepteur 20, ou client, de modifier un état de la fonction avionique. Pour la fonction de gestion de radio de navigation mise en œuvre par le système de gestion de radio (RMS), la commande de modification est par exemple une commande de lancement d'autotest(s) d'un récepteur radio ; pour la fonction de gestion de vol mise en œuvre le système de gestion de vol (FMS), la commande de modification est par exemple une commande d'activation d'un plan de vol temporaire ; pour la fonction de météorologie par exemple mise en œuvre par le système radar de météorologie, la commande de modification est par exemple une commande de changement de mode d'alerte.

A titre d'exemple complémentaire encore, la commande avionique est une commande de calcul, c'est-à-dire une commande permettant à un dispositif récepteur 20, ou client, de requérir un calcul particulier de la part de la fonction avionique. Pour la fonction de gestion de vol mise en œuvre le système de gestion de vol (FMS), la commande de calcul est par exemple une commande de calcul d'une déclinaison magnétique en un point du globe.

A titre d'exemple complémentaire encore, la commande avionique est une commande de création, c'est-à-dire une commande permettant à un dispositif récepteur 20, ou client, de requérir une création, de la part de la fonction avionique, telle que la création d'un nouvel aéroport dans une base de données utilisateur pour le système de gestion de vol.

A titre d'exemple complémentaire encore, la commande avionique est une commande d'activation, c'est-à-dire une commande permettant à un dispositif récepteur 20, ou client, de requérir une activation, de la part de la fonction avionique, telle que l'activation de l'autotest d'un récepteur TACAN pour le système de gestion de radio (RMS).

Chaque dispositif avionique émetteur 18 est configuré en outre pour émettre, à destination du ou des dispositifs électroniques récepteurs 20, au moins un message de données, tel qu'un message de domaine d'usage 36.

Chaque dispositif avionique émetteur 18 comprend un module de génération 40 configuré pour générer un message de données respectif, le message étant par exemple le message de domaine d'usage 36 contenant une liste de commande(s) avionique(s) disponible(s) pour la fonction avionique correspondante.

Chaque dispositif avionique émetteur 18 comprend un module d'émission 46 configuré pour émettre le message généré à destination du ou des dispositifs récepteurs 20.

En complément facultatif, chaque dispositif avionique émetteur 18 comprend en outre un module de gestion d'abonnement 48 configuré pour, en réponse à une requête d'abonnement émise par le dispositif récepteur 20, envoyer régulièrement au dispositif récepteur 20 un ou plusieurs paquets de données correspondant à une liste de paquet(s) demandé(s), la requête d'abonnement incluant ladite liste de paquet(s) demandé(s).

Chaque dispositif électronique récepteur 20 est configuré pour recevoir des données, en particulier des messages de données, via le réseau de communication 14.

Chaque dispositif récepteur 20 comprend un module de réception 50 configuré pour recevoir via le réseau de communication 14 au moins un message de données, notamment le message de domaine d'usage 36, et un module de traitement 52 configuré pour traiter chaque message reçu.

Dans l'exemple de la figure 1, l'écran d'affichage 27 est distinct du dispositif récepteur 20, tout en étant directement connecté au dispositif récepteur 20, le dispositif récepteur 20 pilotant, par exemple via son module de traitement 52, l'affichage des données sur l'écran d'affichage 27, notamment celles contenues dans un message reçu par le module de réception 50.

En variante, non représentée, l'écran d'affichage 27 est intégré au dispositif récepteur 20.

Dans l'exemple de la figure 1, d'une part, le module de génération 40, le module d'émission 46, ainsi qu'en complément facultatif le module de gestion d'abonnement 48, et d'autre part, le module de réception 50 et le module de traitement 52, sont réalisés chacun sous forme d'un logiciel exécutable par le processeur 26. La mémoire 24 est alors apte à stocker un logiciel de génération configuré pour générer un message de données respectif, le message étant par exemple le message de domaine d'usage 36 contenant une liste de commande(s) avionique(s) disponible(s) pour la fonction avionique correspondante, un logiciel d'émission configuré pour émettre le message généré à destination du ou des dispositifs récepteurs 20. En complément facultatif, la mémoire 24 est apte à stocker un logiciel de gestion d'abonnement configuré pour, en réponse à une requête d'abonnement émise par le dispositif récepteur 20, envoyer régulièrement au dispositif récepteur 20 un ou plusieurs paquets de données correspondant à la liste de paquet(s) demandé(s) incluse dans ladite requête. La mémoire 24 est également apte à stocker un logiciel de réception configuré pour recevoir via le réseau de communication 14 au moins un message de données, en particulier le message de domaine d'usage, et un logiciel de traitement configuré pour traiter chaque message reçu, et , en particulier le message de domaine d'usage. Le processeur 26 de l'unité de traitement d'informations 22 est alors apte à exécuter le logiciel de génération et le logiciel d'émission, ainsi qu'en complément facultatif le logiciel de gestion d'abonnement, dans le cas du dispositif émetteur 18, ou bien à exécuter le logiciel de réception et le logiciel de traitement dans le cas du dispositif récepteur 20.

En variante non représentée, d'une part, le module de génération 40, le module d'émission 46, ainsi qu'en complément facultatif le module de gestion d'abonnement 48, et d'autre part, le module de réception 50 et le module de traitement 52, sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Specific Integrated Circuit*).

Le message de domaine d'usage 36 comporte la liste de commande(s) avionique(s) disponible(s) pour la fonction avionique correspondante.

En complément facultatif, le message de domaine d'usage 36 contient en outre une plage de valeur(s) autorisée(s) pour un paramètre associé à une commande avionique disponible.

La plage de valeur(s) autorisée(s) est par exemple sous une des formes suivantes :
- un intervalle de valeurs autorisées entre une valeur minimale et valeur maximale, par exemple lorsque le paramètre est une grandeur physique, telle qu'une altitude ;
- un ensemble de valeurs autorisées entre une valeur minimale et valeur maximale avec un incrément entre deux valeurs autorisées successives, par exemple lorsque le paramètre est une grandeur physique, telle qu'une altitude ;
- un ensemble de caractères autorisés ;
- un ensemble d'identifiants autorisés ; et
- un état optionnel ou non du paramètre.

En complément encore, le message de domaine d'usage 36 contient en outre un statut d'indisponibilité pour une commande avionique indisponible pour la fonction avionique correspondante. Le message de domaine d'usage 36 contient de préférence encore un motif d'indisponibilité pour ladite commande avionique indisponible.

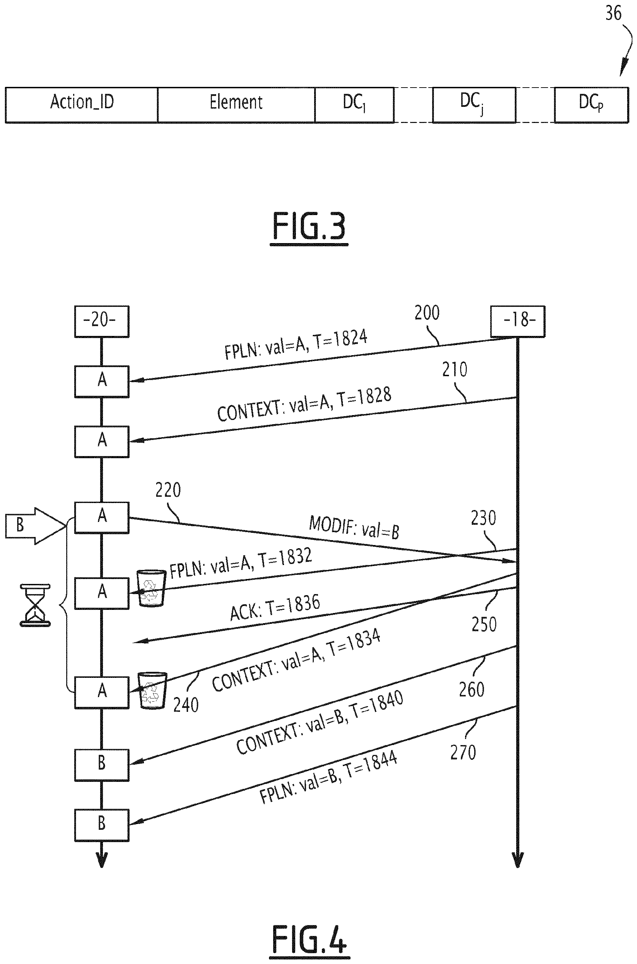

Dans l'exemple de la figure 3, le message de domaine d'usage 36 comprend un en-tête fonctionnel, formé d'un champ d'identification de type d'action Action_ID (du français *Action IDentifiant* ou de l'anglais *Action IDentifier*) et d'un champ d'élément Element contenant l'élément sur lequel porte l'action, et un ou plusieurs agrégats de données DC (de l'anglais *Data Cluster*)*.* A chaque agrégat DC est associé un indice j, de valeur comprise entre 0 et P, où P est un nombre entier supérieur ou égal à 0 représentant le nombre d'agrégat(s) inclus dans le message de domaine d'usage 36.

L'homme du métier comprendra que l'indice j est égal à 0, lorsque la commande avionique associée n'a pas de paramètre, et que le message de domaine d'usage 36 ne comporte alors pas d'agrégat DC et comprend seulement l'en-tête fonctionnel, avec le champ d'identification de type d'action Action_ID et le champ d'élément Element. Une commande avionique ne comportant pas de paramètre est, par exemple, une commande de suppression d'un élément donné, telle qu'une commande de suppression d'un plan de vol temporaire pour la fonction de gestion de vol. Dans ce cas, le champ d'identification de type d'action Action_ID comporte l'identifiant de cette action de suppression, et le champ d'élément Element identifie l'élément à supprimer, tel que le plan de vol temporaire.

Chaque agrégat contient un champ d'identifiant DC_ID (de l'anglais *Data Cluster IDentifier*), un champ de taille DC_B_S (de l'anglais *Data Cluster Body Size*) et un champ de données utiles DC_V (de l'anglais *Data Cluster Value*) contenant les données utiles de l'agrégat correspondant, non représentés.

Le champ d'identification de type d'action Action_ID contient un identifiant d'un type d'action demandée. Le type d'action est par exemple une requête de consultation, une requête de modification, une requête de calcul, une requête de création, une requête d'activation, ou encore une publication. L'homme du métier comprendra alors que, lorsque le type d'action est une requête, celle-ci correspond à une commande avionique, cette requête étant alors contenue dans un message émis par le dispositif récepteur 20 à destination du dispositif avionique 18, afin que ce dernier effectue la commande avionique associée à la requête.

Lorsque le message généré est le message de domaine d'usage 36, celui-ci est émis par le dispositif avionique 18 à destination du dispositif récepteur 20, et l'action associée, contenue dans le champ d'identification de type d'action Action_ID dudit message de domaine d'usage 36, est une publication (de l'anglais *publish*).

Le champ d'élément Element présente une structure identique à celle de l'agrégat DC, décrite ci-dessus, et contient alors un champ d'identifiant Element_ID (de l'anglais *Element IDentifier*), un champ de taille Element_B_S (de l'anglais *Element Body Size*), et un champ de données utiles Element_V (de l'anglais *Element Value*) contenant les données utiles de l'élément, non représentés.

Une telle structure du message de domaine d'usage 36 permet alors de transmettre de manière simple les différentes informations précitées susceptibles d'être contenues dans le message de domaine d'usage 36.

A titre d'exemple, la liste de commande(s) avionique(s) disponible(s) est fournie fonction avionique par fonction avionique, et pour chaque fonction avionique associée à un champ Element respectif, les agrégats suivant l'élément et associés à cet élément, ou fonction avionique, sont des agrégats de plage de valeurs ou des agrégats d'indisponibilité.

Chaque agrégat de plage de valeurs est associé à une commande avionique respective, et contient un identifiant de ladite commande avionique et, pour chaque paramètre associé à ladite commande avionique pour lequel une plage de valeur(s) autorisée(s) est à préciser, ladite plage de valeur(s) autorisée(s).

En complément facultatif, ces informations d'identification de la commande avionique et du ou des paramètres associés, ainsi que de plage(s) de valeur(s) autorisée(s), sont générées au sein du champ de données utiles DC_V de l'agrégat de plage de valeurs, en respectant la grammaire précitée avec notamment les champs Action_ID et DC_ID. Le cas échéant, le champ de données utiles DC_V contient, par exemple, un tableau où chaque ligne correspond à une commande avionique respective. Chaque ligne de ce tableau inclus dans le champ DC_V comprend alors un Action_ID identifiant l'action associée à la commande, un DC_ID identifiant ladite commande avionique, le nombre de paramètres pour lequel une plage de valeur(s) autorisée(s) est à préciser, et pour chaque paramètre concerné, un identifiant dudit paramètre, suivi d'une ou plusieurs données définissant la plage de valeur(s) autorisée(s) pour ce paramètre, par exemple une donnée indiquant le type de plage de valeur(s) et des données indiquant respectivement la valeur minimale et la valeur maximale de cette plage de valeur(s). Les informations précitées, comprises dans chaque ligne associée à une commande avionique, correspondent alors typiquement à des colonnes respectives du tableau inclus dans le champ DC_V.

L'homme du métier comprendra alors que lorsqu'un agrégat de plage de valeurs est contenu dans le message de domaine d'usage 36 pour une commande avionique respective, alors cela signifie qu'il s'agit d'une commande avionique disponible. Autrement dit, selon cet exemple, la liste de commande(s) avionique(s) disponible(s) pour un élément respectif de la fonction avionique correspond à la liste des commandes identifiées via l'ensemble d'agrégat(s) de plage de valeurs contenu dans le message de domaine d'usage 36 pour l'élément Element correspondant,.

Chaque agrégat d'indisponibilité est également associé à une commande avionique respective, et contient un identifiant de ladite commande avionique et le statut d'indisponibilité, également appelé état d'indisponibilité. En complément facultatif, chaque agrégat d'indisponibilité contient en outre le motif d'indisponibilité pour ladite commande avionique avec le statut d'indisponibilité.

En complément facultatif, ces informations d'identification de la commande avionique et de statut d'indisponibilité sont générées au sein du champ de données utiles DC_V de l'agrégat d'indisponibilité, en respectant la grammaire précitée avec notamment les champs Action_ID et DC_ID. Le cas échéant et de manière analogue à l'agrégat de plage de valeurs, le champ de données utiles DC_V de l'agrégat d'indisponibilité contient, par exemple, un tableau où chaque ligne correspond à une commande avionique respective, chaque ligne comprenant un Action_ID identifiant l'action associée à la commande, un DC_ID identifiant ladite commande avionique, et un indicateur d'indisponibilité de ladite commande, voire une donnée complémentaire précisant le motif d'indisponibilité

Le module de génération 40 est configuré pour générer le message de domaine d'usage 36 contenant la liste de commande(s) avionique(s) disponible(s) pour la fonction avionique correspondante

En complément facultatif, le module de génération 40 est configuré pour, en réponse à une requête en fourniture de données émise par le dispositif récepteur 20, générer un message d'acquittement contenant une condition minimale de mise à disposition des données requises, les données requises étant disponibles pour le dispositif récepteur 20 dans un autre message de données reçu de la part du dispositif avionique 18 dès lors que la condition minimale de mise à disposition est vérifiée.

La condition minimale de mise à disposition est choisie parmi le groupe consistant en : un instant temporel minimal et une valeur minimale d'un indicateur.

Dans l'exemple de la figure 4, ainsi que cela sera décrit plus en détail par la suite, la condition minimale de mise à disposition est un instant temporel minimal, à savoir l'instant temporel correspondant à T = 1836.

Le module d'émission 46 est en particulier configuré pour émettre le message de domaine d'usage 36 à destination du ou des dispositifs récepteurs 20, pour l'affichage de la disponibilité de la ou des seules commandes incluses dans ladite liste.

Le module de gestion d'abonnement 48 est configuré pour, en réponse à une requête d'abonnement émise par le dispositif récepteur 20, envoyer régulièrement au dispositif récepteur 20 des paquets de données correspondant à une liste de paquet(s) demandé(s).

Par envoi régulier, on entend par exemple un envoi suite à chaque mise à jour, et le module de gestion d'abonnement 48 est alors configuré pour, suite à chaque mise à jour d'un paquet de ladite liste, envoyer au dispositif récepteur 20 le paquet de données mis à jour.

En variante ou en complément, par envoi régulier, on entend un envoi périodique ou pseudopériodique, et le module de gestion d'abonnement 48 est alors configuré pour, au cours d'une période temporelle prédéfinie, envoyer - au moins une fois - chaque paquet de données de ladite liste au dispositif récepteur 20.

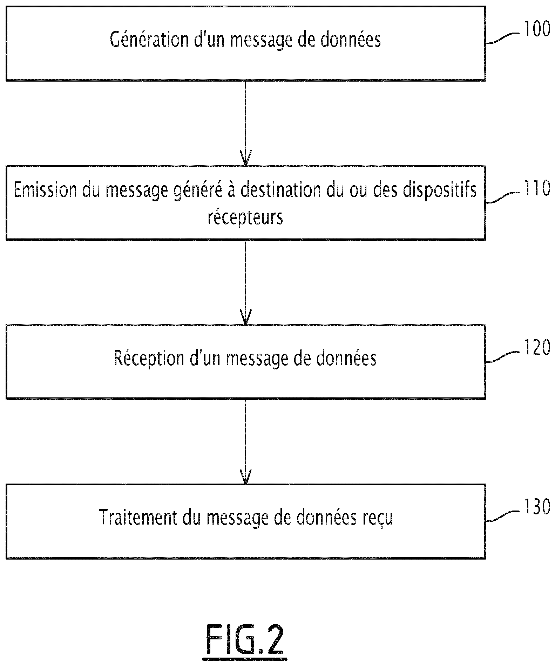

Le fonctionnement du système de communication 10 selon l'invention va désormais être expliqué à l'aide de la figure 2 représentant un organigramme d'un procédé de transmission de données au sein du système de communication 10 depuis un dispositif avionique émetteur 18 à destination de dispositif(s) récepteur 20 via le réseau avionique de communication 14.

Lors d'une étape initiale 100, le dispositif avionique émetteur 18 génère, via son module de génération 40, un ou plusieurs messages de données, notamment le message de domaine d'usage 36.

Selon l'invention, le message de domaine d'usage 36 contient la liste de commande(s) avionique(s) disponible(s) pour la fonction avionique correspondante, mise en œuvre par le dispositif avionique émetteur 18.

En complément facultatif, le message de domaine d'usage 36 contient en outre la plage de valeur(s) autorisée(s) pour un paramètre associé à une commande avionique disponible.

En complément encore, le message de domaine d'usage 36 contient en outre le statut d'indisponibilité pour une commande avionique indisponible pour la fonction avionique correspondante. Le message de domaine d'usage 36 contient de préférence encore le motif d'indisponibilité pour ladite commande avionique indisponible.

Le message de domaine d'usage 36 présente par exemple la structure telle que décrite précédemment en regard de la figure 3.

Le dispositif avionique émetteur 18 émet ensuite, lors de l'étape suivante 110 et via son module d'émission 46, le ou les messages de données générés, notamment le message de domaine d'usage 36, sur le réseau avionique de communication 14 à destination du ou des dispositifs récepteurs 20.

Lors de l'étape 120, chaque dispositif récepteur 20 destinataire reçoit, via le réseau avionique de communication 14 et son module de réception 50, le ou les messages de données émis à son attention, notamment le message de domaine d'usage 36.

Chaque dispositif récepteur 20 ayant reçu au moins un message traite alors, lors de l'étape suivante 130 et via son module de traitement 52, le ou les messages reçus, notamment le message de domaine d'usage 36.

Lors de l'étape de traitement 130, le module de traitement 52 pilote alors l'affichage de la disponibilité de la ou des seules commandes incluses dans ladite liste contenue dans le message de domaine d'usage 36 reçu, cette disponibilité étant affichée sur l'écran d'affichage 27.

Sur la figure 4, est illustrée la mise en œuvre, à titre complémentaire et facultatif, d'un acquittement avec une condition minimale de mise à disposition des données requises.

Le dispositif avionique émetteur 18 émet, à l'instant temporel T = 1824, un message de plan de vol FPLN avec une valeur A, comme représenté par la flèche 200, puis il émet un message de contexte CONTEXT avec la valeur A à l'instant temporel T = 1828 (flèche 210). Le message de plan de vol FPLN est un message périodique, et les données contenues dans ce message sont des données périodiques, la notion de données périodiques étant définie plus en détail par la suite.

Le dispositif récepteur 20 souhaite ensuite modifier la valeur A et la remplacer par la valeur B, comme représenté par la flèche 'B', et envoie alors au dispositif avionique 18 une requête en fourniture de données, telle qu'ici une requête en modification MODIF pour prise en compte de la valeur B, c'est-à-dire pour modification de la valeur A en la valeur B, comme représenté par la flèche 220.

Entretemps, le dispositif avionique émetteur 18 a émis, à l'instant temporel T = 1832, un nouveau message de plan de vol FPLN avec la valeur A (flèche 230), suivi d'un nouveau message de contexte CONTEXT avec toujours cette valeur A, à l'instant temporel T = 1834 (flèche 240).

En réponse à la requête en fourniture de données MODIF émise par le dispositif récepteur 20, le dispositif avionique 18 génère, via son module de génération 40, un message d'acquittement ACK (flèche 250) contenant une condition minimale de mise à disposition des données requises. Les données requises seront alors disponibles pour le dispositif récepteur 20 dans un autre message de données reçu de la part du dispositif avionique 18 dès lors que la condition minimale de mise à disposition sera vérifiée.

Dans cet exemple de la figure 4, la condition minimale de mise à disposition est un instant temporel minimal, à savoir l'instant temporel correspondant à T = 1836.

En variante, la condition minimale de mise à disposition est une valeur minimale d'un indicateur prédéfini.

Quand le dispositif récepteur 20 reçoit les derniers messages FPLN et CONTEXT émis respectivement aux instants T = 1832 et T = 1834, il sait automatiquement que ces messages contiennent encore la valeur A étant donné que la condition minimale de mise à disposition n'est pas encore remplie, l'instant temporel minimal T = 1836 n'étant pas encore atteint. Le dispositif récepteur 20 décide alors d'ignorer ces derniers messages FPLN et CONTEXT reçus, comme symbolisé par la poubelle sur la figure 4.

Le dispositif avionique émetteur 18 émet ensuite, à l'instant temporel T = 1840, un nouveau message de contexte CONTEXT avec la valeur B (flèche 260), suivi d'un nouveau message de plan de vol FPLN avec la valeur B à l'instant temporel T = 1844 (flèche 270).

Etant donné que les instants temporels associés à ces deux derniers messages CONTEXT et FPLN, à savoir respectivement T = 1840 et T = 1844, sont cette fois-ci supérieurs à l'instant temporel minimal T = 1836, c'est-à-dire que la condition minimale de mise à disposition est désormais remplie, le dispositif récepteur 20 en déduit simplement que ces deux derniers messages CONTEXT et FPLN, reçus aux instants T = 1840 et T = 1844, contiennent la valeur B requise.

Cet acquittement avec condition minimale de mise à disposition des données requises permet alors de garantir facilement une cohérence des contextes chez les dispositifs récepteurs 20, chaque dispositif récepteur sachant, autrement dit, quelle version de contexte ou de donnée périodique il doit attendre.

En complément, pour la transmission de données entre le dispositif émetteur 18 et le ou les dispositifs récepteurs 20, différents motifs de transmission sont envisagés.

Un motif de publication en mode multi-diffusé est prévu pour une émission de données génériques, d'un dispositif émetteur 18 vers tous les dispositifs récepteurs 20 reliés au réseau avionique de communication 14. Cette émission en mode multi-diffusé est effectuée sur événement, de manière périodique, ou encore sur requête. Par exemple, dans le cas d'une interface entre un système de gestion du vol et une visualisation, l'émission en mode multi-diffusé doit être déclenchée sur un événement du dispositif émetteur 18 pour maintenir un affichage à jour, et est optionnellement complétée par une émission périodique pour surveiller une éventuelle perte de transmission.

Un motif uni-diffusé (de l'anglais *unicast*) est prévu pour une notification d'un dispositif émetteur 18 vers un dispositif récepteur 20, ce motif étant également appelé motif de notification. Ceci permet à un dispositif émetteur 18 d'envoyer des informations de manière unitaire, c'est-à-dire non récurrente, vers un dispositif récepteur 20 particulier. Le motif de notification permet de limiter l'utilisation du réseau avionique de communication 14 au strict nécessaire.

Un motif uni-diffusé est prévu pour une requête d'un dispositif récepteur 20 vers un dispositif émetteur 18, ce motif étant également appelé motif de requête. Dans ce cas, la requête sera suivie d'un acquittement du dispositif émetteur 18 pour informer le dispositif récepteur 20 de la prise en compte de sa requête.

Un motif uni-diffusé bidirectionnel d'abonnement/réponse est une combinaison d'un motif de requête, à savoir une requête d'abonnement, suivi de son acquittement qui va déclencher automatiquement, chez le dispositif émetteur 18, un motif de notification des agrégats auxquels le dispositif récepteur 20 s'est abonné. L'émission de l'abonnement est effectuée sur événement, de manière périodique ou encore sur requête. Par exemple, dans le cas d'une interface entre un système de gestion du vol et une visualisation, l'émission de l'abonnement est effectuée sur un événement du dispositif émetteur 18, suite à la réception de la requête d'abonnement puis sur changement d'un contexte du dispositif émetteur 18, ceci pour maintenir une bonne réactivité. Dans cet exemple, l'émission de l'abonnement est optionnellement complétée par une émission périodique pour surveiller une éventuelle perte de transmission.

Les données émises par le dispositif avionique 18 sont par exemple des données périodiques. Par données périodiques, on entend des données nécessaires soit à un affichage de premier niveau (vers un utilisateur final) de l'état d'un dispositif avionique 18, indépendamment du type d'affichage (textuel ou graphique), et donc du type de dispositif récepteur 20, soit à une interprétation de l'état de premier niveau d'un dispositif avionique 18 par un autre dispositif avionique 18.

Lorsque le dispositif avionique 18 est un système de gestion de vol ou FMS, les données périodiques sont par exemple des données de trajectoire à suivre, des données de localisation ou encore des données de guidage. Lorsque le dispositif avionique 18 est un système de gestion de radio ou RMS, les données périodiques concernent par exemple un état de tuning des radios, une déclaration de panne. Lorsque le dispositif avionique 18 est un système d'alerte terrain ou TAWS, les données périodiques sont par exemple des données de prédiction de collision terrain.

Les données périodiques doivent être transmises régulièrement par le dispositif avionique 18, le nombre de dispositifs récepteurs 20 écoutant les données étant, par exemple, inconnu du dispositif avionique 18.

Le motif de transmission utilisé préférentiellement pour la transmission des données périodiques est alors le motif de publication en mode multi-diffusé qui permet de fournir au dispositif récepteur 20 la mise à jour de l'état du dispositif émetteur 18.

En complément, les données émises par le dispositif avionique 18 sont des données contextuelles. Par données contextuelles, on entend l'ensemble des données aptes être affichées relativement à une capacité du dispositif émetteur 18. Les données contextuelles ne comprennent par contre pas de données liées à un affichage purement graphique, tels que des segments graphiques. Les données contextuelles sont diffusées par le dispositif émetteur 18 sur requête du dispositif récepteur 20.

Lorsque le dispositif avionique 18 est un système de gestion de vol ou FMS, les données contextuelles concernent par exemple des états défaut/inséré/calculé des paramètres d'un leg, des paramètres de définition d'un hippodrome ou circuit d'attente en phase d'approche (de l'anglais *holding pattern*), ou d'un vol direct vers une destination (de l'anglais *direct-to*), des paramètres de définition d'un point ou d'une route pilote. Lorsque le dispositif avionique 18 est un système de gestion de radio ou RMS, les données contextuelles concernent par exemple des résultats de test des radios.

Les données contextuelles et les données périodiques forment deux ensembles susceptibles de se recouvrir partiellement. A titre d'exemple, lorsque le dispositif avionique 18 est un système de gestion de vol ou FMS, les noms des procédures de départ et d'arrivée sont utilisables en affichage permanent, tel que sur une ligne de temps (de l'anglais *timeline*), et correspondent alors à des données périodiques, ainsi que de manière contextuelle pour sélectionner les procédures de départ et d'arrivée, et correspondent alors à des données contextuelles.

Comme la transmission des données contextuelles est soumise à de fortes contraintes temps réel, le volume des données contextuelles nécessaires à chaque instant doit être limité, la demande du dispositif récepteur 20 doit donc porter à la fois sur l'élément sur lequel il souhaite des informations, mais aussi sur le ou les paquets fonctionnels d'informations qui l'intéressent.

Le motif de transmission utilisé préférentiellement pour la transmission des données contextuelles est alors le motif uni-diffusé bidirectionnel d'abonnement/réponse, ceci pour gérer à la fois la demande du dispositif récepteur 20 vers le dispositif avionique 18 et les informations de réponse transmises par le dispositif avionique 18 au dispositif récepteur 20.

En complément, le dispositif avionique 18 gère, via son module de gestion d'abonnement 48, une éventuelle requête d'abonnement émise par un dispositif récepteur, en envoyant, en réponse à une telle requête d'abonnement, régulièrement au dispositif récepteur 20 les paquets de données correspondant à la liste de paquet(s) demandé(s), incluse dans la requête d'abonnement.

A titre d'exemple de séquence d'abonnement/réponse, le dispositif récepteur 20 émet sa requête d'abonnement avec la liste complète des éléments/paquets demandés.

Ensuite, via son module de gestion d'abonnement 48, le dispositif avionique 18 acquitte la réception de cette requête et clôt l'abonnement précédent pour ce dispositif récepteur 20 (de tous les paquets) et le remplace par la nouvelle demande d'abonnement associée à la requête reçue.

Le dispositif avionique 18 émet alors, dès que possible et via son module de gestion d'abonnement 48 et son module d'émission 46, tous les paramètres définis dans les paquets vers le dispositif récepteur 20.

Tant que l'abonnement n'est pas modifié, le dispositif avionique 18 émet à nouveau les paramètres des éléments/paquets à chaque mise à jour, et sinon périodiquement, avec une période temporelle comprise par exemple entre 1 et 5 secondes. Cette émission périodique permet de réduire le risque d'une erreur permanente.

La période temporelle est par exemple fixée par le dispositif avionique 18 selon les paquets. En variante, la période temporelle est prédéfinie.

Ainsi, le dispositif avionique 18 selon l'invention permet d'améliorer le couplage avec le ou les dispositifs récepteurs 20, chaque dispositif récepteur 20 ayant besoin de savoir si la commande est disponible ou non avant de l'afficher pour proposer à l'utilisateur de la sélectionner s'il le souhaite.

Cet objectif est en outre atteint tout en nécessitant pas que le dispositif récepteur 20 inclut une logique liée à une version du dispositif avionique émetteur 18, ce qui aurait limité l'interopérabilité.

L'émission du message de domaine d'usage 36 est faite uniquement lors de l'initialisation de l'échange de données entre le dispositif avionique 18 et le dispositif récepteur 20 correspondant, et/ou est réalisée dynamiquement. L'émission dynamique du message de domaine d'usage 36 est par exemple effectuée lorsque le dispositif récepteur 20 s'abonne à un contexte.

En outre, l'affichage de la raison pour laquelle une commande n'est pas autorisée, lorsque le message de domaine d'usage 36 comporte en outre cette information complémentaire, permet à l'utilisateur final de connaitre cette raison de non-autorisation, pour pouvoir ensuite réaliser au besoin les actions nécessaires à l'autorisation de la commande avionique concernée.

Lorsque le message de domaine d'usage 36 contient en outre une plage de valeur(s) autorisée(s) pour un paramètre associé à une commande avionique disponible, cela permet de pouvoir facilement faire évoluer une fonction avionique mise en œuvre par le dispositif avionique émetteur 18 sans avoir à modifier la mise en œuvre de l'interface homme-machine du côté du ou des dispositifs récepteurs 20. A titre d'exemple, il est alors possible de faire évoluer le domaine de vol d'un système de gestion de vol ou FMS sans retoucher l'interface homme-machine interactive associée ; ou encore, cela permet de faire facilement évoluer la taille de l'identifiant d'une radio.

On conçoit ainsi que le dispositif avionique 18 et le procédé d'émission associé, permettent d'améliorer le couplage entre le dispositif avionique 18 et le ou les dispositifs récepteurs 20.

## Revendications

1. Dispositif avionique (18) destiné à être embarqué à bord d'un aéronef (16), le dispositif avionique (18) étant configuré pour mettre en œuvre une fonction avionique et commander l'affichage, par au moins un dispositif électronique récepteur (20), de données associées à la fonction avionique, la fonction avionique comportant une ou plusieurs commandes avioniques aptes à être affichées par le dispositif récepteur (20) et sélectionnées par un utilisateur,
le dispositif avionique (18) comprenant :
- un module de génération (40) configuré pour générer un message de données, et
- un module d'émission (46) configuré pour émettre le message généré à destination du dispositif récepteur (20),
**caractérisé en ce que** le module de génération (40) est configuré pour générer un message de domaine d'usage (36) contenant une liste de commande(s) avionique(s) disponible(s) pour la fonction avionique correspondante, et
le module d'émission (46) est configuré pour émettre le message de domaine d'usage (36) à destination du dispositif récepteur (20), pour l'affichage de la disponibilité de la ou des seules commandes incluses dans ladite liste.

2. Dispositif avionique (18) selon la revendication 1, dans lequel le message de domaine d'usage (36) contient en outre une plage de valeur(s) autorisée(s) pour un paramètre associé à une commande avionique disponible.

3. Dispositif avionique (18) selon la revendication 1 ou 2, dans lequel le message de domaine d'usage (36) contient en outre un statut d'indisponibilité pour une commande avionique indisponible pour la fonction avionique correspondante,
le message de domaine d'usage (36) contenant de préférence en outre un motif d'indisponibilité pour ladite commande avionique indisponible.

4. Dispositif avionique (18) selon l'une quelconque des revendications précédentes, dans lequel, en réponse à une requête en fourniture de données, émise par le dispositif électronique récepteur (20), le module de génération (40) est configuré pour générer un message d'acquittement (ACK) contenant une condition minimale de mise à disposition des données requises,
les données requises étant disponibles pour le dispositif récepteur (20) dans un autre message de données reçu de la part du dispositif avionique (18) dès lors que la condition minimale de mise à disposition est vérifiée.

5. Dispositif avionique (18) selon l'une quelconque des revendications précédentes, dans lequel le dispositif avionique (18) comprend en outre un module de gestion d'abonnement (48) configuré pour, en réponse à une requête d'abonnement émise par le dispositif électronique récepteur (20), envoyer régulièrement au dispositif récepteur (20) un ou plusieurs paquets de données correspondant à une liste de paquet(s) demandé(s), la requête d'abonnement incluant ladite liste de paquet(s) demandé(s).

6. Dispositif avionique (18) selon la revendication 5, dans lequel le module de gestion d'abonnement (48) est configuré pour, suite à chaque mise à jour d'un paquet de ladite liste, envoyer au dispositif récepteur (20) le paquet de données mis à jour.

7. Procédé d'émission d'un message de données à destination d'au moins un dispositif électronique récepteur (20), le procédé d'émission étant mis en œuvre par un dispositif avionique (18) destiné à être embarqué à bord d'un aéronef (16), le dispositif avionique (18) étant configuré pour mettre en œuvre une fonction avionique et pour commander l'affichage, par le dispositif récepteur (20), de données associées à la fonction avionique, la fonction avionique comportant une ou plusieurs commandes avioniques aptes à être affichées par le dispositif récepteur (20) et sélectionnées par un utilisateur,
le procédé d'émission comprenant les étapes suivantes :
- la génération (100) d'un message de données, et
- l'émission (110) du message généré à destination du dispositif récepteur (20),
**caractérisé en ce que** l'étape de génération (100) comporte la génération d'un message de domaine d'usage (36) contenant une liste de commande(s) avionique(s) disponible(s) pour la fonction avionique correspondante, et
l'étape d'émission (110) comporte l'émission du message de domaine d'usage (36) à destination du dispositif récepteur (20), pour l'affichage de la disponibilité de la ou des seules commandes incluses dans ladite liste.

8. Dispositif électronique récepteur (20) configuré pour recevoir un message de données de la part d'un dispositif avionique (18) destiné à être embarqué à bord d'un aéronef (16),
le dispositif avionique (18) étant apte à mettre en œuvre une fonction avionique et à commander l'affichage, via le dispositif électronique récepteur (20), de données associées à la fonction avionique, la fonction avionique comportant une ou plusieurs commandes avioniques aptes à être affichées par le dispositif récepteur (20) et sélectionnées par un utilisateur,
le dispositif électronique récepteur (20) comprenant :
- un module de réception (50) configuré pour recevoir un message de la part du dispositif avionique (18), et
- un module de traitement (52) configuré pour traiter chaque message reçu,
**caractérisé en ce que** le module de réception (50) est configuré pour recevoir, de la part du dispositif avionique (18), un message de domaine d'usage (36) contenant une liste de commande(s) avionique(s) disponible(s) pour la fonction avionique correspondante, et
le module de traitement (52) est configuré pour piloter l'affichage, sur un écran d'affichage (27), de la disponibilité de la ou des seules commandes incluses dans ladite liste contenue dans le message reçu de domaine d'usage (36).

9. Procédé de réception d'un message de données de la part d'un dispositif avionique (18) destiné à être embarqué à bord d'un aéronef,
le dispositif avionique (18) étant apte à mettre en œuvre une fonction avionique et à commander l'affichage, via le dispositif électronique récepteur (20), de données associées à la fonction avionique, la fonction avionique comportant une ou plusieurs commandes avioniques aptes à être affichées par le dispositif récepteur (20) et sélectionnées par un utilisateur,
le procédé de réception étant mis en œuvre par un dispositif électronique récepteur (20) et comprenant les étapes suivantes :
- la réception (120) d'un message de la part du dispositif avionique (18), et
- le traitement (130) de chaque message reçu,
**caractérisé en ce que** l'étape de réception (120) comporte la réception d'un message de domaine d'usage (36), émis de la part du dispositif avionique (18), le message de domaine d'usage (36) contenant une liste de commande(s) avionique(s) disponible(s) pour la fonction avionique correspondante, et
l'étape de traitement (130) comporte le pilotage de l'affichage, sur un écran d'affichage (27), de la disponibilité de la ou des seules commandes incluses dans ladite liste contenue dans le message reçu de domaine d'usage (36).

10. Programme d'ordinateur comportant des instructions logicielles qui, lorsqu'elles sont exécutées par un ordinateur, mettent en œuvre un procédé d'émission selon la revendication 7 ou un procédé de réception selon la revendication 9.

## Patentansprüche

1. Avionikvorrichtung (18), die vorgesehen ist, an Bord eines Luftfahrzeuges (16) mitgeführt zu werden, wobei die Avionikvorrichtung (18) ausgebildet ist, durch mindestens eine elektronische Empfangsvorrichtung (20) eine luftfahrttechnische Funktion durchzuführen und die Anzeige von der luftfahrttechnischen Funktion zugeordneten Daten zu steuern, wobei die luftfahrttechnische Funktionen einen oder mehrere luftfahrttechnische(n) Befehle aufweist, die geeignet sind, von der Empfangsvorrichtung (20) angezeigt zu werden und von einer Benutzerperson ausgewählt zu werden, wobei
die Avionikvorrichtung (18) umfasst:
- ein Erzeugungsmodul (40), das ausgebildet ist, eine Datennachricht zu erzeugen und
- ein Sendemodul (46), das ausgebildet ist, die erzeugte Nachricht an die Empfangsvorrichtung (20) zu senden,
**dadurch gekennzeichnet, dass** das Erzeugungsmodul (40) ausgebildet ist, eine Einsatzbereichsnachricht (36) zu erzeugen, die eine Liste von für die entsprechende luftfahrttechnische Funktion verfügbaren luftfahrttechnischen Befehl(en) enthält und
- das Sendemodul (46) ausgebildet ist, die Einsatzbereichsnachricht an die Empfangsvorrichtung (20) zu senden, um die Verfügbarkeit des Befehls oder der einzelnen in der Liste eingeschlossenen Befehle anzuzeigen.

2. Avionikvorrichtung (18) nach Anspruch 1, bei der die Einsatzbereichsnachricht (36) außerdem einen Bereich eines bzw. von autorisierten Werten für einen Parameter, der einem verfügbaren luftfahrttechnischen Befehl zugeordnet ist.

3. Avionikvorrichtung (18) nach Anspruch 1 oder 2, bei der die Einsatzbereichsnachricht (36) außerdem einen Nichtverfügbarkeitsstatus für einen nicht verfügbaren luftfahrttechnischen Befehl für die entsprechende luftfahrttechnische Funktion enthält,
wobei die Einsatzbereichsnachricht (36) vorzugsweise außerdem ein Nichtverfügbarkeitsmuster für den nicht verfügbaren luftfahrttechnischen Befehl enthält.

4. Avionikvorrichtung (18) nach einem beliebigen der vorhergehenden Ansprüche, bei der in Antwort auf eine Anfrage der Datenbereitstellung, die von der elektronischen Empfangsvorrichtung (20) gesendet wird, das Erzeugungsmodul (40) ausgebildet ist, eine Bestätigungsnachricht (ACK) zu erzeugen, die eine minimale Bedingung der Bereitstellung der angeforderten Daten enthält,
wobei die angeforderten Daten für die Empfangsvorrichtung (20) in einer anderen Datennachricht bereitgestellt werden, die von Seiten der Avionikvorrichtung (18) empfangen wird, sobald die minimale Bedingung der Bereitstellung verifiziert ist.

5. Avionikvorrichtung (18) nach einem beliebigen der vorhergehenden Ansprüche, bei der die Avionikvorrichtung (18) außerdem ein Abonnement-Verwaltungsmodul (48) umfasst, das ausgebildet ist, in Antwort auf eine Abonnementanforderung, die von der elektronischen Empfangsvorrichtung (20) gesendet wird, regelmäßig ein oder mehrere Datenpakete entsprechend einer Liste von einem oder mehreren angefragten Paketen zu senden, wobei die Abonnementanforderung die Liste von einem oder mehreren angefragten Paketen einschließt.

6. Avionikvorrichtung (18) nach Anspruch 5, bei dem das Abonnement-Verwaltungsmodul (48) ausgebildet ist, nach jedem Aktualisieren eines Pakets der Liste das aktualisierte Datenpaket an die Empfangsvorrichtung (20) zu senden.

7. Verfahren zum Senden einer Datennachricht an mindestens eine elektronische Empfangsvorrichtung (20), wobei das Sendeverfahren von einer Avionikvorrichtung (18) durchgeführt wird, die vorgesehen ist, an Bord eines Luftfahrzeuges (16) mitgeführt zu werden, wobei die Avionikvorrichtung (18) ausgebildet ist, eine luftfahrttechnische Funktion durchzuführen und die Anzeige von der luftfahrttechnischen Funktion zugeordneten Daten durch die mindestens eine elektronische Empfangsvorrichtung (20) zu steuern, wobei die luftfahrttechnische Funktion einen oder mehrere luftfahrttechnische(n) Befehle aufweist, die geeignet sind, von der Empfangsvorrichtung (20) angezeigt zu werden und von einer Benutzerperson ausgewählt zu werden,
wobei das Sendeverfahren die folgenden Schritte umfasst:
- Erzeugen (100) einer Datennachricht und
- Senden (110) der erzeugte Nachricht an die Empfangsvorrichtung (20),
**dadurch gekennzeichnet, dass** der Erzeugungsschritt (100) die Erzeugung einer Einsatzbereichsnachricht (36) aufweist, die eine Liste von einem oder mehreren für die entsprechende luftfahrttechnische Funktion verfügbaren luftfahrttechnischen Befehlen und
der Sendeschritt (110) das Senden der Einsatzbereichsnachricht (36) an die Empfangsvorrichtung (20) zur Anzeige der Verfügbarkeit des Befehls oder der einzelnen in der Liste eingeschlossenen Befehle aufweist.

8. Elektronische Empfangsvorrichtung (20), die ausgebildet ist, eine Datennachricht seitens einer Avionikvorrichtung (18), die vorgesehen ist, an Bord eines Luftfahrzeuges (16) mitgeführt zu werden, zu empfangen, wobei
die Avionikvorrichtung (18) geeignet ist, eine luftfahrttechnische Funktion durchzuführen und über die elektronische Empfangsvorrichtung (20) die Anzeige von der luftfahrttechnischen Funktion zugeordneten Daten zu steuern, wobei die luftfahrttechnische Funktion einen oder mehrere luftfahrttechnische(n) Befehle aufweist, die geeignet sind, von der Empfangsvorrichtung (20) angezeigt und von einer Benutzerperson ausgewählt zu werden, wobei
die elektronische Empfangsvorrichtung (20) umfasst:
- ein Empfangsmodul (50), das ausgebildet ist, eine Nachricht seitens der Avionikvorrichtung (18) zu empfangen und
- ein Verarbeitungsmodul (52), das ausgebildet ist, jede empfangene Nachricht zu verarbeiten,
**dadurch gekennzeichnet, dass** das Empfangsmodul (50) ausgebildet ist, seitens der Avionikvorrichtung (18) eine Einsatzbereichsnachricht (36) zu empfangen, die eine Liste von einem oder mehreren verfügbaren luftfahrttechnischen Befehlen für die entsprechende luftfahrttechnische Funktion enthält, und
das Verarbeitungsmodul (52) ausgebildet ist, die Anzeige der Verfügbarkeit des oder der einzelnen Befehle, die in der in der empfangenen Einsatzbereichsnachricht (36) enthaltenen Liste eingeschlossen sind, auf einem Anzeigeschirm (27) zu steuern.

9. Verfahren zum Empfangen einer Daten Nachricht seitens einer Avionikvorrichtung (18), die vorgesehen ist, an Bord eines Luftfahrzeugs mitgeführt zu werden, wobei
die Avionikvorrichtung (18) geeignet ist, eine luftfahrttechnische Funktion durchzuführen und über die elektronische Empfangsvorrichtung (20) die Anzeige von der luftfahrttechnischen Funktion zugeordneten Daten zu steuern, wobei die luftfahrttechnische Funktion einen oder mehrere luftfahrttechnische(n) Befehle aufweist, die geeignet sind, von der Empfangsvorrichtung (20) angezeigt und von einer Benutzerperson ausgewählt zu werden, wobei
das Empfangsverfahren von einer elektronischen Empfangsvorrichtung (20) durchgeführt wird und die folgenden Schritte umfasst:
- Empfangen (120) eine Nachricht seitens der Avionikvorrichtung (18) und
- Verarbeiten (130) jeder empfangenen Nachricht,
**dadurch gekennzeichnet, dass** der Empfangsschritt (120) den Empfang einer Einsatzbereichsnachricht (36), die seitens der Avionikvorrichtung (18) gesendet wird, aufweist, wobei die Einsatzbereichsnachricht (36) eine Liste von einem oder mehreren verfügbaren luftfahrttechnischen Befehlen für die entsprechende luftfahrttechnische Funktion enthält, und
der Verarbeitungsschritt (130) das Steuern der Anzeige der Verfügbarkeit des oder der einzelnen in der Liste eingeschlossenen Befehle, die in der empfangenen Einsatzbereichsnachricht (36) enthalten sind, auf einem Anzeigeschirm aufweist.

10. Rechenprogramm, das Softwarebefehle aufweist, die, wenn sie von einem Rechner ausgeführt werden, ein Sendeverfahren nach Anspruch 7 oder ein Empfangsverfahren nach Anspruch 9 durchführen.

## Claims

1. An avionics device (18) intended to be on board an aircraft (16), the avionics device (18) being configured to implement an avionics function and to control the display, by at least one receiving electronic device (20), of data associated with the avionics function, the avionics function including one or several avionics commands able to be displayed on the receiving device (20) and selected by a user,
the avionics device (18) comprising:
- a generating module (40) configured to generate a data message, and
- a sending module (46) configured to send the generated message to the receiving device (20),
**characterized in that** the generating module (40) is configured to generate a usage domain message (36) containing a list of avionics command(s) available for the corresponding avionics function, and
the sending module (46) is configured to send the usage domain message (36) to the receiving device(s) (20), to display the availability of only the command(s) included in said list.

2. The avionics device (18) according to claim 1, wherein the usage domain message (36) further contains a range of authorized value(s) for a parameter associated with an available avionics command.

3. The avionics device (18) according to claim 1 or 2, wherein the usage domain message (36) further contains an unavailability status for an avionics command unavailable for the corresponding avionics function,
the usage domain message (36) preferably further containing an unavailability pattern for said unavailable avionics command.

4. The avionics device (18) according to any one of the preceding claims, wherein, in response to a data provision request, sent by the receiving electronic device (20), the generating module (40) is configured to generate an acknowledgment message (ACK) containing a minimum condition for provision of the requested data,
the requested data being available for the receiving device (20) in another data message received from the avionics device (18) once the minimal provision condition is verified.

5. The avionics device (18) according to any one of the preceding claims, wherein the avionics device (18) further comprises a subscription management module (48) configured, in response to a subscription request sent by the receiving electronic device (20), to regularly send the receiving device (20) one or several data packets corresponding to a list of requested packet(s), the subscription request including said list of requested packet(s).

6. The avionics device (18) according to claim 5, wherein the subscription management module (48) is configured, following each update of a packet of said list, to send the receiving device (20) the updated data packet.

7. A method for sending a data message to at least one receiving electronic device (20), the method being implemented by an avionics device (18) intended to be on board an aircraft (16), the avionics device (18) being configured to implement an avionics function and to control the display, by the receiving electronic device (20), of data associated with the avionics function, the avionics function including one or several avionics commands able to be displayed by the receiving device (20) and selected by a user,
the sending method comprising the following steps:
- generating (100) a data message, and
- sending (110) the generated data message to the receiving device (20),
**characterized in that** the generating step (100) including generating a usage domain message (36) containing a list of avionics command(s) available for the corresponding avionics function, and
the sending step (110) includes sending the usage domain message (36) to the receiving device (20), to display the availability of the only command(s) included in said list.

8. An electronic receiving device (20) configured to receive a data message from an avionics device (18) intended to be placed on board an aircraft (16),
the avionics device (18) being able to implement an avionics function and to control the display, via the receiving electronic device (20), of data associated with the avionics function, the avionics function including one or several avionics commands able to be displayed by the receiving device (20) and selected by a user,
the electronic receiving device (20) comprising:
- a receiving module (50) configured to receive a message from the avionics device (18), and
- a processing module (52) configured to process each received message,
**characterized in that** the receiving module (50) is configured to receive, from the avionics module (18), a usage domain message (36) containing a list of avionics command(s) available for the corresponding avionics function, and
the processing module (52) is configured to control the display, on a display screen (27), of the availability of the only command(s) included in said list contained in the received usage domain message (36).

9. A method for receiving a data message from an avionics device (18) intended to be on board an aircraft,
the avionics device (18) being able to implement an avionics function and to control the display, via the receiving electronic device (20), of data associated with the avionics function, the avionics function including one or several avionics commands able to be displayed by the receiving device (20) and selected by a user,
the receiving method being implemented by a receiving electronic device (20) and comprising the following steps:
- receiving (120) a message from the avionics device (18), and
- processing (130) each received message,
**characterized in that** the receiving step (120) includes receiving a usage domain message (36), sent by the avionics device (18), the usage domain message (36) containing a list of avionics command(s) available for the corresponding avionics function, and
the processing step (130) including controlling the display, on a display screen (27), of the availability of the only command(s) included in said list contained in the received usage domain message (36).

10. A computer program comprising software instructions which, when executed by a computer, carry out a sending method according to claim 7 or a receiving method according to claim 9.
